## Europäisches Patentamt
## European Patent Office
## Office européen des brevets

(19)

(11) Veröffentlichungsnummer: **0 001 419**
**B1**

(12)

# EUROPÄISCHE PATENTSCHRIFT

(21) Anmeldenummer: 78100949.3

(22) Anmeldetag: 21.09.78

(51) Int. Cl.³: **F 24 H 1/22, F 24 D 11/02**

(54) Anlage mit einer Wärmepumpe zur Raumheizung und Brauchwasseraufbereitung

(30) Priorität: 12.10.77 CH 12443/77

(43) Veröffentlichungstag der Anmeldung:
18.04.79 Patentblatt 79/08

(45) Bekanntmachung des Hinweises auf die Patenterteilung:
12.11.80 Patentblatt 80/23

(84) Benannte Vertragsstaaten:
BE CH DE FR GB NL SE

(56) Entgegenhaltungen:
DE - A - 1 920 252
FR - A - 2 196 060
FR - A - 2 291 455
GB - A - 1 180 426
US - A - 3 327 947

(73) Patentinhaber: **GEBRÜDER SULZER AKTIENGESELLSCHAFT**
**Zürcherstrasse 9**
**CH - 8401 Winterthur (CH)**

(72) Erfinder: **Huber, Rudolf**
**Möttelistrasse 61**
**CH - 8400 Winterthur (CH)**

(74) Vertreter: **Marsch, Helmut, Dipl.-Ing., et al**
**Lindemannstrasse 31**
**D - 4000 Düsseldorf (DE)**

Courier Press, Leamington Spa, England.

Anlage mit einer Wärmepumpe zur Raumheizung und Brauchwasseraufbereitung

Die Erfindung betrifft eine Anlage zur Raumheizung und Brauchwasseraufbereitung, mit einem Kombinationskessel und einer Wärmepumpe, wobei der Kessel einen durch eine Feuerung und/oder einen Heizeinsatz heizbaren ersten Wasserraum und einen mit diesem kommunizierenden zweiten Wasserraum aufweist, in welchem sich eine Wärmeübertragungsfläche zum Aufheizen von Brauchwasser befindet.

Bei Anlagen der genannten Art dient die Wärmepumpe zur Brauchwasseraufbereitung in der heizungsfreien Jahreszeit, außerdem zur Heizung in den Übergangszeiten, sowie zur Ergänzung der Heizungs- und Brauchwasseraufbereitungsleistung des Kombinationskessels während der übrigen Jahreszeit. Nach dem Stand der Technik werden diese Aufgaben der Wärmepumpe z.B. dadurch gelöst, indem die Wärmepumpe zur direkten Erwärmung des Brauchwarmwasserspeichers geschaltet ist, wobei das sekundärseitig aus der Wärmepumpe austretende Wasser üblicherweise durch eine im Brauchwasserspeicher angeordnete Rohrschlange geführt ist. Hier und im folgenden wird die Verdampferseite der Wärmepumpe als primärseitig, die Kondensatorseite als sekundärseitig bezeichnet. Die Wärmepumpe kann auch sekundärseitig an einen separaten Warmwasserspeicher angeschlossen sein, welcher seinerseits zur Erwärmung des Brauchwarmwasserspeichers geschaltet ist und mit dem Heizungsteil der Anlage in Verbindung steht. Üblich sind auch entsprechende Kombination, wobei die Wärmepumpe sekundärseitig sowohl an den Brauchwarmwasserspeicher wie an einen separaten Warmwasserspeicher angeschlossen ist.

Dieser Stand der Technick weist jedoch verschiedene Nachteile auf. Falls die Wärmepumpe nur zur Erwärmung des Brauchwarmwasserspeichers geschaltet ist, ergibt sich jeweils nur eine kurze Einschaltdauer der Wärmepumpe, da der Brauchwarmwasserspeicher auf Grund seines relativ geringen Volumens schnell aufgeheizt wird. Auch besteht die Gefahr, daß das zur Wärmepumpe zurückzirkulierende Wasser eine verhältnismäßig hohe Temperatur aufweist, welche zu einem unzulässigen Druckanstieg im Arbeitsmittelkreislauf der Wärmepumpe führen würde. Dadurch bedingte kurze Einschaltzeiten der Wärmepumpe bringen jedoch einen ungenügenden Auslastungsgrad derselben, während zudem hohe sekundärseitige Eintrittstemperaturen den Wirkungsgrad der Wärmepumpe erheblich verringern. In beiden Fällen verschlechtert sich somit das Kosten/Nutzen-Verhältnis der Wärmepumpe, was in Anbetracht ihrer hohen Anlagekosten wirtschaftlich untragbar ist und einen breiteren Einsatz der umweltfreundlichen und energiesparenden Wärmepumpe bisher praktisch verhindert hat.

Falls die Wärmepumpe sekundärseitig an einen separaten Warmwasserspeicher angeschlossen ist, werden die obenerwähnten Nachteile zwar vermindert, wobei zusätzlich jedoch andere Nachteile auftreten. Durch den separaten Warmwasserspeicher ergibt sich eine sehr komplizierte Anlage mit vielen Steuerventilen, Umschalt- und Verbindungsleitungen und eine entsprechend umfangreiche regeltechnische Ausrüstung. Die Anlage muß in einer Vielzahl von Einzelkomponenten an den Installationsort spediert werden und dort unter großen Aufwand kombiniert, montiert und in Betrieb gesetzt werden. Die so erstellte Anlage ist naturgemäß sehr platzraubend und kostspielig im Unterhalt. Bei einer solchen Anlage sind ferner die Isolationskosten nicht unerheblich.

Es ist Aufgabe der Erfindung, eine Anlage der eingangs erwähnten Art zu schaffen, welche einerseits die Voraussetzungen für einen optimalen Betrieb und Nutzungsgrad der Wärmepumpe aufweist, d.h. lange Einschaltdauer, niedrige sekundärseitige Wassereintrittstemperatur, großes Speichervolumen, und andererseits eine wesentlich einfachere, kompaktere und betriebssichere Bauart als bisher aufweist, wobei insbesondere ein wesentlicher Teil der bisher erforderlichen Schaltungen, Steuerventile und Regelorgane wegfallen.

Diese Aufgabe wird erfindungsgemäss dadurch gelöst, dass der Kombinationskessel einen dritten Wasserraum mit einer Wärmeübertragungsfläche für das Vorwärmen von kaltem Brauchwasser aufweist, mit welchum, vorzugsweise im Bereich niedrigster Wassertemperatur, der Kondensatorteil der Wärmepumpe verbunden ist, von welcher nach Aufheizung das Wasser in den zweiten Wasserraum zurückgeführt wird, und dass der dritte Wasserraum wenigstens mit dem zweiten Wasserraum kommuniziert.

Durch diese Gestaltung wird erreicht, daß ein grosses sekundärseitiges Speichervolumen für die Wärmepumpe zur Verfügung steht, ohne daß die erwähnten Nachteile eines separaten Warmwasserspeichers in bezug auf Platz, Schaltungen, Steuerventile usw. in Kauf genommen werden müssen. Da der dritte Wasserraum direkt mit dem zweiten Wasserraum kommuniziert, fallen die bisher erforderlichen Leitungen und Steuerventile weg. Durch die direkte Kommunikation zwischen den erwähnten Wasseräumen wird weiter erreicht, daß der dritte Wasserraum im Volumen kleiner gehalten werden kann als die bisher üblichen separaten Wärmespeicher, da jetzt auch der zweite Wasserraum als Warmwasserspeicher für die Wärmepumpe herbeigezogen wird. Durch einen direkten Übertritt vom zweiten Wasserraum in den dritten Wasserraum durch mindestens eine, Konvektionsströmungen zwischen dem zweiten und dem dritten Wasserraum erschwerende Übertrittsstelle wird erreicht, daß sich zwischen dem zweiten und dritten Wasserraum bei Betrieb der Wärmepumpe eine temperaturmäßige Differenzierung einstellen kann. Die ganze Anlage wird somit volumenmäßig kleiner und kompakter. Durch das Vorwärmen von kaltem Brauchwasser in dem vorzugsweise als Schichtspeicher wirkenden dritten Wasserraum wird erreicht, daß das aus diesem austretende Wasser für den sekundärseitigen Eintritt der Wärmepumpe eine verhältnismäßig niedrige Temperatur aufweist. Die Wärmepumpe kann also mit jeweils längerer Einschaltdauer und hohem Wirkungsgrad arbeiten.

Gemäß einer besonders zweckmäßigen Ausführungsform der Erfindung kommuniziert der erwähnte dritte Wasserraum auch noch direkt mit dem ersten Wasserraum. Durch diese Integration der Wasserräume ergibt sich als weiterer Vorteil, daß der Feuerungsraum auch in der heizungsfreien Jahreszeit durch den Betrieb der Wärmepumpe mit relativ warmem Wasser durchströmt wird, was durch geringere Kondensation im Feuerungsraum eine beachtliche Korrosionsverminderung ergibt.

Als weiterer Vorteil ist noch zu erwähnen, daß sich durch die erfindungsgemäße Anordnung der genannten Wasserräume die Möglichkeit ergibt, mit geringem Aufwand eine Heizung bzw. Brauchwasservorwärmung mit einem Anschluß für eine unabhängige Wärmequelle im genannten dritten Wasserraum zu installieren.

Die nähere Erläuterung der Erfindung ergibt sich anhand von Ausführungsbeispielen in Verbindung mit nachstehender Zeichnung. Es zeigen:

Fig. 1 eine schematische Darstellung einer Anlage gemäß der Erfindung, teilweise im Längsschnitt, mit ölgefeuertem Kessel,

Fig. 2 eine schematische Darstellung einer in der erfindungsgemäßen Anlage verwendbaren Wärmepumpe mit Sonnenkollektor,

Fig. 3 eine detaillierte Darstellung des Kombinationskessels gemäß Fig. 1 im Längsschnitt,

Fig. 4 den Schnitt gemäß der Linie IV—IV nach Fig. 3,

Fig. 5 den Schnitt gemäß der Linie V—V nach Fig. 3 und

Fig. 6—8 weitere Ausführungen von Kombinationskesseln für eine Anlage gemäß Fig. 1 im Längsschnitt.

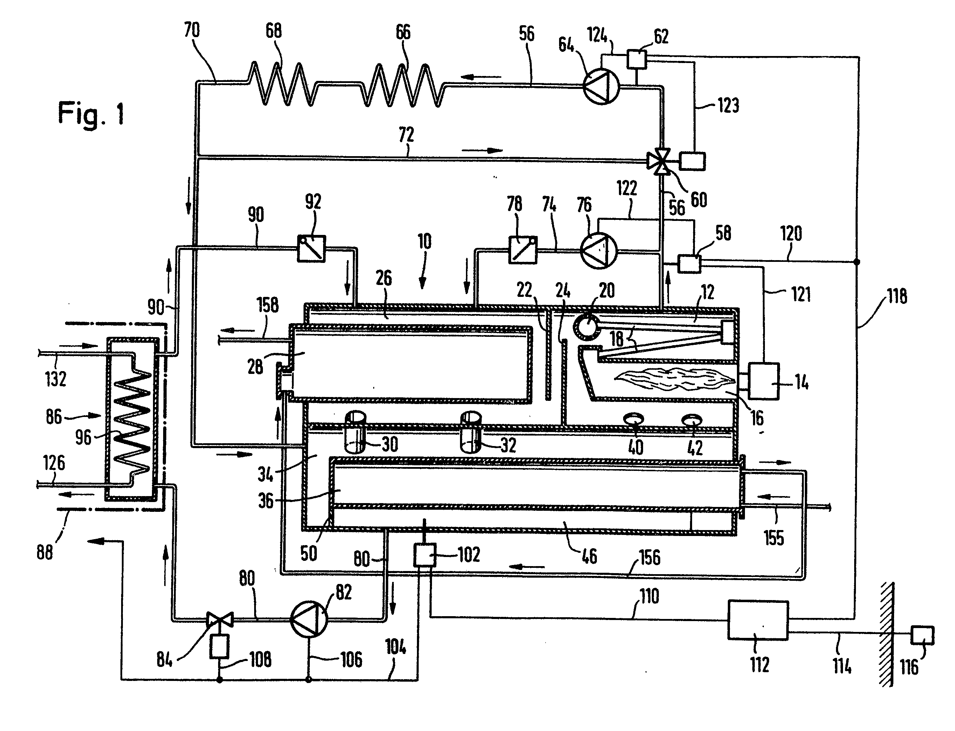

Ein Kombinationskessel 10 (Fig. 1, 3—5) weist einen ersten Wasserraum 12 auf, der durch einen Ölbrenner 14, einen Brennschacht 16, durch Rauchgasrohre 18 und einen Rauchgasabzug 20 beheizt wird. Durch Leitbleche 22, 24 findet eine Kommunikation zwischen dem ersten Wasserraum 12 und dem zweiten Wasserraum 26 statt, der als Wärmeübertragungsfläche zum Aufheizen von Brauchwasser einen Boiler 28 aufweist. Der zweite Wasserraum 26 kommuniziert über paarweise angeordnete Rohrstutzen 30, 31, 32 mit einem dritten Wasserraum 34, der als Wärmeübertragungsfläche für das Vorwärmen von kaltem Brauchwasser einen Brauchwasservorwärmer 36 mit einem Trennblech 38 aufweist und über Öffnungen 40, 41, 42 mit dem ersten Wasserraum 12 kommunizieren kann. Im dritten Wasserraum 34 ist ferner ein Gabelrohr 44 angeordnet, das sich bis ca. zur Mitte des genannten Wasserraumes erstreckt. Der Brauchwasservorwärmer 36 ist auf Trägerbalken 46, 48 abgestützt, welche einseitig durch ein Verbindungsblech 50 verbunden sind. Der ganze Kombinationskessel 10 ist auf Stützen 52, 54 abgestützt.

Vom ersten Wasserraum 12 führt eine Heizungsvorlaufleitung 56 mit einem Kesselthermostaten 58 über ein Mischventil 60, einen Vorlaufthermostaten 62 sowie über die Zirkulationspumpe 64 zu den Heizkörpern 66, 68. Diese sind über die Heizungsrücklaufleitung 70 mit dem Gabelrohr 44 verbunden. Die Heizungsrücklaufleitung 70 ist über die Bypassleitung 72 mit dem Mischventil 60 verbunden. Eine Leitung 74 führt ferner von der Heizungsvorlaufleitung 56 über eine Zirkulationspumpe 76 und ein Rückschlagventil 78 zum zweiten Wasserraum 26. Die Strömungsrichtung in den Leitungen ist durch Pfeile angegeben.

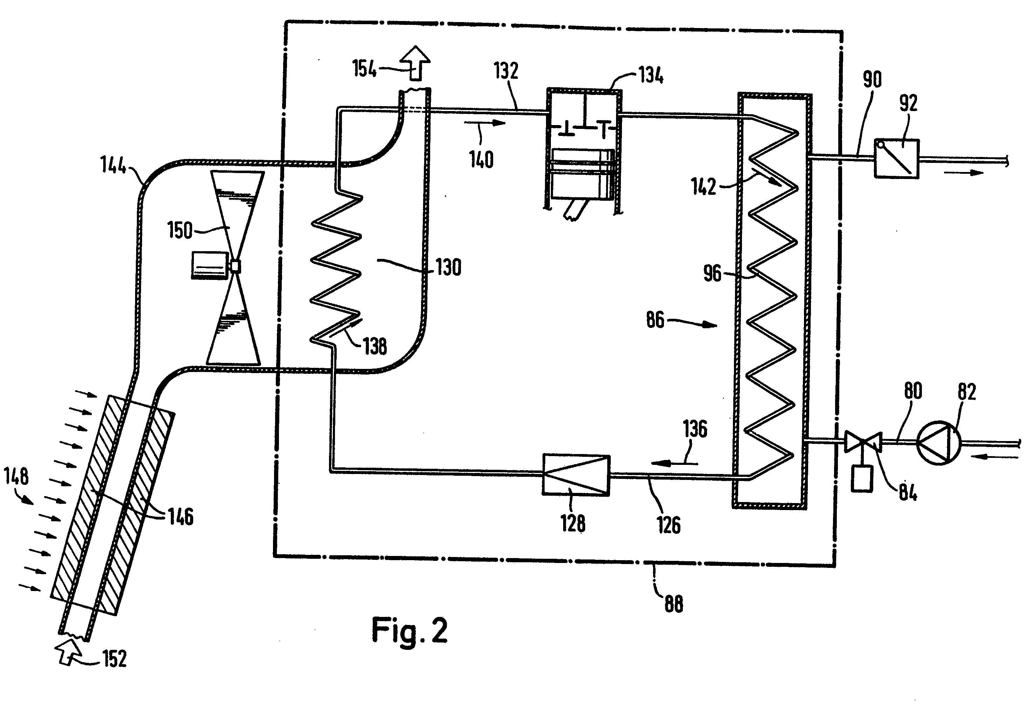

Vom dritten Wasserraum 34 führt eine Leitung 80 über eine Zirkulationspumpe 82 und ein Sperrventil 84 zum Kondensator 86 einer Wärmepumpe 88 (Fig. 2). Dieser ist über die Leitung 90 sowie das Rückschlagventil 92 mit dem zweiten Wasserraum 26 verbunden. Der dritte Wasserraum 34 weist ferner einen Sperrthermostaten 102 für die Wärmepumpe 88 auf. Dieser ist über eine Signalleitung 104 mit der Wärmepumpe 88 und über Zweigsignalleitungen 106 bzw. 108 mit der Zirkulationspumpe 82 und dem Sperrventil 84 verbunden. Eine Signalleitung 110 führt zu einem zentralen Steuergerät 112, welches über eine Signalleitung 114 mit einem Außenthermostaten 116 verbunden ist. Eine Signalleitung 118 mit der Zweigsignalleitung 120 verbindet das zentrale Steuergerät 112 mit dem Kesselthermostaten 58 bzw. mit dem Vorlaufthermostaten 62. Vom Kesselthermostaten 58 führen Signalleitungen 121, 122 zum Ölbrenner 14 bzw. zur Zirkulationspumpe 76, und der Vorlaufthermostat 62 ist über Signalleitungen 123, 124 mit dem Mischventil 60 bzw. mit der Zirkulationspumpe 64 verbunden.

Von der das Arbeitsmedium der Wärmepumpe führenden Rohrschlange 96 des Kondensators 86 führt eine Leitung 126 über ein Drosselventil 128 zu einem Verdampfer 130. Von diesem führt eine Leitung 132 über einen Verdichter 134 zurück zum Kondensator 86, wobei das Arbeitsmedium gemäß den Pfeilen 136, 138, 140, 142 in einem geschlossenen Kreislauf geführt wird. Als Arbeitsmedium der Wärmepumpe kommt eines der üblichen Kältemittel infrage. Der Verdampfer 130 ist in einem Luftschacht 144 angeordnet, welcher mit einem Sonnenkollektor 146 verbunden ist, der gemäß den Pfeilen 148 mit Sonnenlicht bestrahlt wird. Ein Gebläse 150 dient zur Förderung der Luft durch den Sonnenkollektor bzw. über den Verdampfer gemäß den Pfeilen 152, 154.

Der Brauchwasservorwärmer 36 weist eine Eintrittsleitung 155 für Kaltwasser auf und ist mittels einer Leitung 156 mit dem Boiler 28 verbunden. Dessen Entnahmeleitung für Brauchwarmwasser ist mit 158 bezeichnet. Unterhalb der Mündungen der Leitungen 74, 90 im zweiten Wasserraum 26 sind Prallbleche 160, 162 angeordnet.

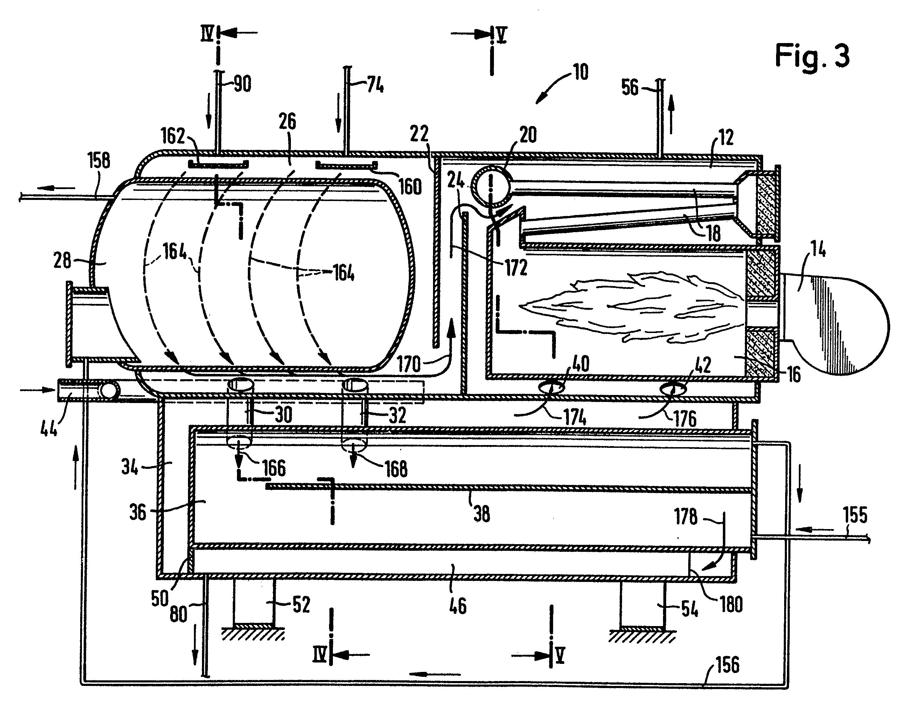

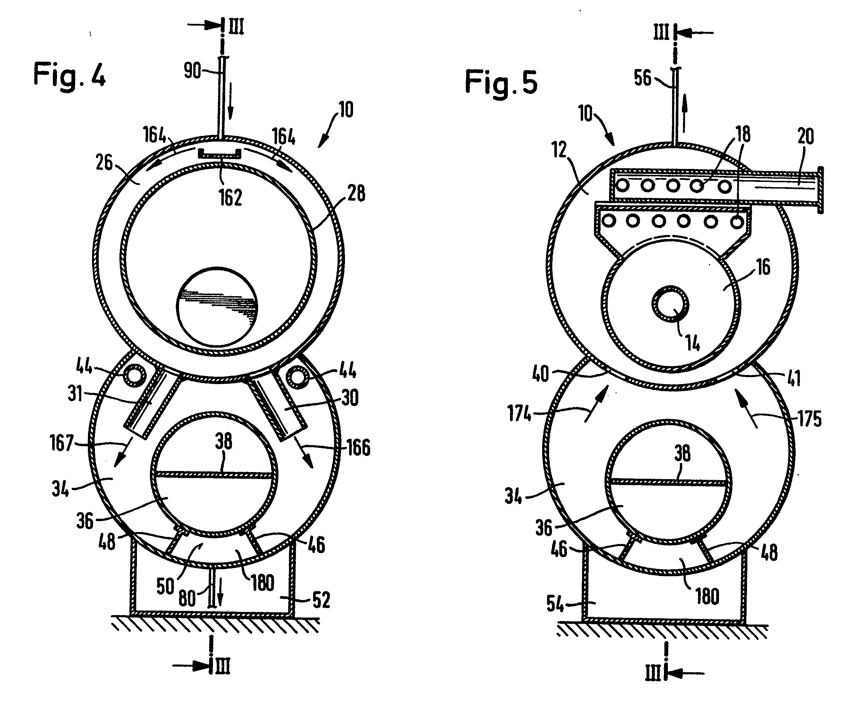

Die Strömungsrichtung des Wassers im zweiten Wasserraum 26 über die Außenwandung des Boilers 28 ist durch Pfeile 164 angegeben. Die Strömungsrichtungen aus dem zweiten Wasserraum 26 in den dritten Wasserraum 34 bzw. in den ersten Wasserraum 12 sind durch die Pfeile 166, 167, 168 bzw. 170, 172 angegeben. Aus dem dritten Wasserraum 34 kann das Wasser gemäß den Pfeilen 174, 175, 176 in den ersten Wasserraum 12 strömen. Wie aus Fig. 3, 4 hervorgeht, sind die als Übertrittsstelle dienenden Rohrstutzen 30, 31, 32 seitlich über den Brauchwaservorwärmer 36 herabgezogen, damit Konvektionsströmungen zwischen dem zweiten und dritten Wasserraum erschwert werden und der Wasserübertritt in den dritten Wasserraum durch laminare Strömung erfolgt. Hierdurch soll erreicht werden, daß sich zwischen dem zweiten und dritten Wasserraum 26 bzw. 34 beim Betrieb der Wärmepumpe 88 eine temperaturmäßige Differenzierung einstellen kann. Weiter soll auch erreicht werden, daß der dritte Wasserraum 34 als Schichtspeicher wirkt, indem sich eine möglichst kühle Wasserschicht im unteren Teil des dritten Wasserraumes 34 bildet. Der Pfeil 178 zeigt die Strömungsrichtung in den durch die Trägerbalken 46, 48 mit der unteren Wand des Brauchwasservorwärmers 36 sowie dem Verbindungsblech 50 gebildeten, einseitig geschlossenen Kanal 180, an dessen Ende die Leitung 80 angeordnet ist.

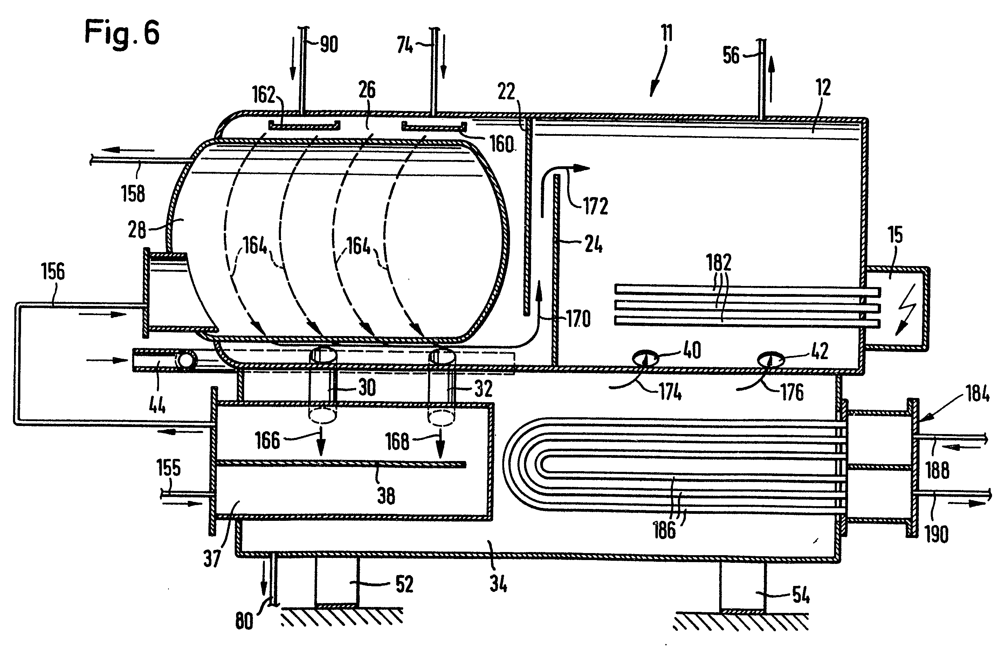

Der Kombinationskessel 11 (Fig. 6) wiest statt dem Ölbrenner 14 einen Elektroheizeinsatz 15 auf, welcher mit in den ersten Wasserraum 12 hineinragenden Heizstäben 182 versehen ist. Neben einem verkürzten Brauchwasservorwärmer 37 ist in diesem Falle ein Heizeinsatz bwz. Wärmeübertragungskörper 184 für eine unabhängige Wärmequelle vorgesehen, welcher als Wärmeübertragungsfläche haarnadelförmige Wärmeübertragungsrohre 186 sowie eine Eintrittsleitung 188 und eine Austrittsleitung 190 aufweist. Als unabhängige Wärmequelle für den Wärmeübertragungskörper 184 kann z.B. eine mit Dampf oder Heißwasser betriebene Fernheizung infrage kommen.

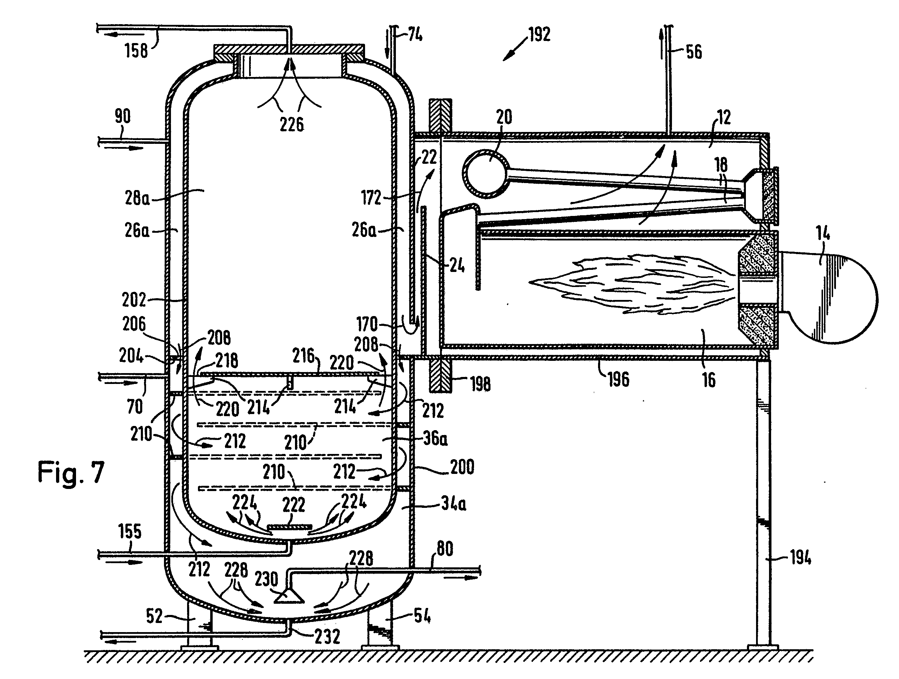

Der Kombinationskessel 192 (Fig. 7) besteht aus einem auf einer Stütze 194 agbestützten horizontalen Feuerungsteil 196 und einem über eine lösbare Flanschverbindung 198 mit diesem verbundenen vertikalen Speicherteil 200, in welchem ein Boiler 202 im wesentlichen konzentrisch angeordnet ist. Durch an der Innenwand des Speicherteils 200 befestigtes Ringblech 204 wird der Ringraum zwischen dem Speicherteil 200 und dem Boiler 202 in einen den zweiten Wasserraum bildenden oberen Teil 26a und einen den dritten Wasserraum bildenden unteren Teil 34a aufgeteilt, wobei statt der rohrförmigen Stutzen 30, 31, 32 ein Ringspalt 206 als Übertrittsstelle zwischen den genannten Wasserräumen dient und die Strömungsrichtung des Wassers durch den Ringspalt durch die Pfeile 208 angegeben ist. Im ringförmigen Teil des Wasserraumes 34a sind ferner Leitbleche 210 angeordnet, welche eine Wasserströmung um den Boiler gemäß den Pfeilen 212 bewirken.

Ein auf Winkelstützen 214 im Boiler 202 angeordnetes Trennblech 216 teilt den Boiler in einen oberen, dem Boiler 28 entsprechenden, als Endstufe dienenden Teil 28a und einen unteren, dem Brauchwasservorwärmer 36 entsprechenden Teil 36a, wobei ein Ringspalt 218 als Übertrittsstelle des Wassers zwischen den genannten Teilen gemäß den Pfeilen 220 dient. Ein Prallblech 222 im unteren Teil des Boilers dient zur seitlichen Verteilung des aus der Leitung 155 zuströmenden kalten Brauchwassers gemäß den Pfeilen 224. Das fertige, erwärmte Brauchwasser entströmt der Boilerendstufe gemäß den Pfeilen 226. Im unteren Teil des Wasserraumes 34a entströmt das Wasser gemäß den Pfeilen 228 über die mit einem Saugmundstück 230 versehene Leitung 80 zur Wärmepumpe. Eine Leitung 232 dient zur Entleerung des Speicherteils 200 zwecks Reinigungs-bzw. Unterhaltsarbeiten.

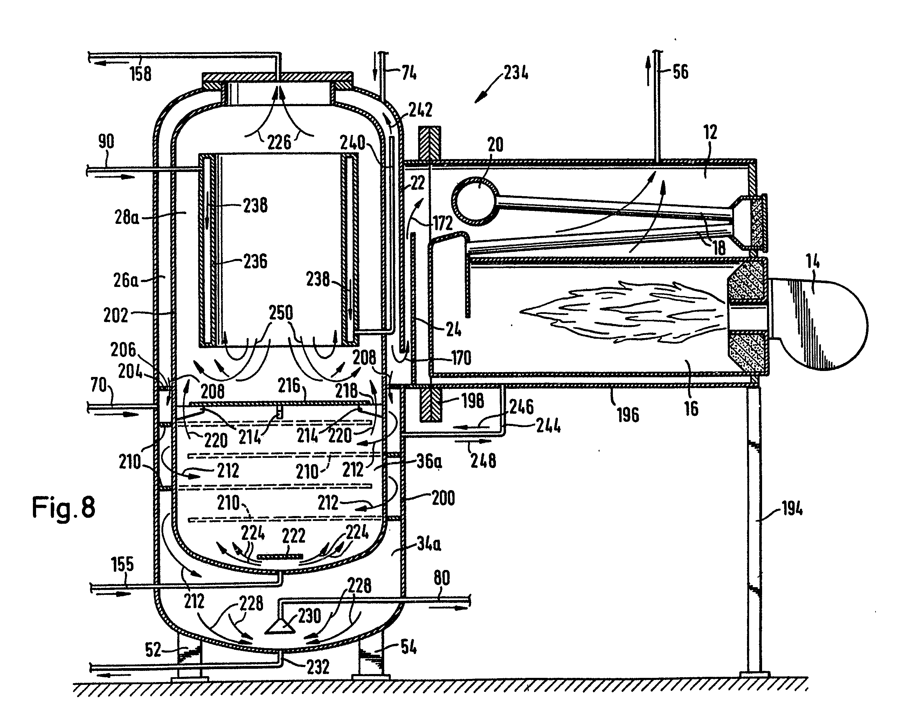

Der Kombinationskessel 234 (Fig. 8) entspricht dem Kombinationskessel 192 gemäß Fig. 7, mit dem Unterschied, daß das über die Leitung 90 aus der Wärmepumpe dem Speicherteil 200 zugeführte Wasser vorerst durch einen im Boiler 202 im wesentlichen konzentrisch angeordneten Doppelmantel 236 gemäß den Pfeilen 238 geführt ist und durch eine Leitung 240 gemäß Pfeil 242 in den oberen Teil des ringförmigen Wesserraumes 26a strömt. Eine Leitung 244 kann vorgesehen sein, durch welche eine beidseitig gerichtete Strömung gemäß den Pfeilen 246, 248 zwischen dem ersten Wasserraum 12 und dem dritten Wasserraum 34a stattfinden kann, z.B. im Falle einer ungenügenden Wasserzirkulation im Kessel, welche zu örtlichen Überhitzungen führen könnte.

Die Arbeitsweise der in den Fig. 1—5 beschriebenen Anlage ist wie folgt:

Bei Sommerbetrieb (Betriebsbeispiel 1, Temperatur der Außenluft über ca. +15°C, Brauchwasseraufbereitung mit Hilfe der Wärmepumpe) werden über das zentrale Steuergerät 112 nach Beeinflussung durch den Außenthermostaten 116 das Mischventil 60 geschlossen und die Zirkulationspumpen 64, 76 sowie der Ölbrenner 14 außer Betrieb gesetzt. Das Sperrventil 84 wird geöffnet und die Zirkulationspumpe 82 sowie die Wärmepumpe 88 werden in Betrieb gesetzt. Die Zirkulationspumpe 82 fördert in diesem Falle Wasser aus dem dritten Wasserraum 34 über die Leitung 80 zum Kondensator 86 der Wärmepumpe 88 und, nach Erwärmung auf eine Temperatur von ca. 55—60°C, über die Leitung 90 in den zweiten Wasserraum 26. Das einströmende Wasser wird von Prallblech 162 aufgefangen und strömt nun im wesentlichen laminar gemäß den Pfeilen 164 über die Außenwandung des Boilers 28 und danach durch die Rohrstrutzen 30, 31, 32 zurück in den dritten Wasserraum 34. Gemäß den Pfeilen 166, 167, 168 strömt das Wasser im wesentlichen laminar über die Außenwandung des Brauchwasservorwärmers 36 und gelangt nach entsprechender Abkühlung gemäß Pfeil 178 in den Kanal 180, von dem aus es durch die Leitung 80 wieder der Wärmepumpe zugeführt wird.

Das kalte Brauchwasser tritt durch die Leitung 155 in den Brauchwasservorwärmer 36 ein und strömt nach entsprechender Vorwärmung über die Leitung 156 zum Boiler 28, wo es auf eine Brauchtemperatur von ca. 50°C erwärmt wird und je nach Bedarf über die Leitung 158 entnommen wird.

Die Arbeitsweise der Wärmepumpe 88 ist wie folgt:

Vom Kondensator 86 zirkuliert das Arbeitsmedium der Wärmepumpe zum Verdampfer 130. Das Gebläse 150 erwärmt diesen durch einen warmen Luftstrom vom Sonnenkollektor 146. Das im Verdampfer erwärmte und verdampfte Arbeitsmedium strömt danach über die Leitung 132 zum Verdichter 134 und nach entsprechender Verdichtung wieder zum Kondensator 86. In der Rohrschlange 96 kondensiert das Arbeitsmedium unter entsprechender Wärmeabgabe an das über die Leitung 80 eintretende bzw. über die Leitung 90 austretende Wasser.

Der Verdampfer 130 der Wärmepumpe könnte selbstverständlich auch nur mit Umgebungsluft ohne Sonnenkollektor bzw. mit Grundwasser, etc. betrieben werden. Der Betrieb mit dem beschriebenen Sonnenkollektor ermöglicht jedoch auf einfache Art und Weise eine Nutzung der Sonnenenergie.

Bei Frühlings- bzw. Herbstbetrieb (Betriebsbeispiel 2, Temperatur der Außenluft zwischen ca. +15°C und ca. +2°C, Brauchwasseraufbereitung und Hiezung mit Hilfe der Wärmepumpe) sind die Betriebsbedingungen gleich wie im Betriebsbeispiel 1, mit dem Unterschied, daß zusätzlich das Mischventil 60 geöffnet und die Zirkulations-pumpe 64 in Betrieb ist. Die Zirkulationspumpe 64 fördert in diesem Falle Wasser aus dem ersten Wasserraum 12 über die Vorlaufleitung 56, die Heizkörper 66, 68, die Rücklaufleitung 70 und das Gabelrohr 44 in den dritten Wasserraum 34. Je nach Beeinflussung durch den Vorlaufthermostaten 62 strömt ein Teil des Wassers aus der Rücklaufleitung 70 über die Bypassleitung 72 zum Mischventil 60. Je nach Wassertemperatur und Mengenverhältnissen kann ein Wasserübertritt in den ersten Wasserraum 12 durch die Öffnungen 40, 41, 42 gemäß den Pfeilen 174, 175, 176 erfolgen. Analog kann ein Wasserübertritt aus dem zweiten Wasserraum 26 in den ersten Wasserraum 12 durch die Übertrittsstelle zwischen den Leitblechen 22, 24 erfolgen. Eine gewisse Zirkulation in Gegenrichtung ist ebenfalls möglich.

Falls aus irgendeinem Grund viel Brauchwasser bezogen werden soll, z.B. mehrere Bäder gleichzeitig oder unmittelbar nacheinander, so wird über eine im zentralen Steuergerät 112 integrierte Zeitimpulsschaltung, beeinflußt vom Kesselthermostaten 58, der Ölbrenner 14 sowie die Zirkulationspumpe 76 in Betrieb gesetzt. Die Zirkulationspumpe 76 fördert in diesem Falle zusätzlich erhitztes Wasser aus dem ersten Wasserraum 12 über die Leitung 74 in den zweiten Wasserraum 26.

Bei mittlerem Winterbetrieb (Betriebsbeispiel 3, Temperatur der Außenluft zwischen ca. +2°C und —2°C, Parallelbetrieb der Wärmepumpe mit Ölbrenner) sind die Betriebsbedingungen gleich wie im Betriebsbeispiel 2, lediglich mit dem Unterschied, daß die Betriebszeiten des Ölbrenners 14 und der Zirkulationspumpe 76 entsprechend länger sind. Wird über längere Zeit kein Brauchwarmwasser bezogen, kann eine Wasserdurchmischung im dritten Wasserraum 34 mit entsprechendem Temperaturanstieg erfolgen. Der Sperrthermostat 102 wird in solchen Fällen beim Überschreiten der zulässigen Wärmepumpeneintrittstemperatur die Wärmepumpe 88 sowie die Zirkulationspumpe 82 außer Betrieb setzen und das Sperrventil 84 schließen.

Bei strengem Winterbetrieb (Betriebsbeispiel 4, Temperatur der Außenluft unter ca. —2°C) sind die Betriebsbedingungen gleich wie in Betriebsbeispiel 3, mit dem Unterschied, daß das zentrale Steuergerät 112 nach Beeinflussung durch den Außenthermostaten 116 eine dauernde Außerbetriebsetzung der Wärmepumpe 88 und der Zirkulationspumpe 82 sowie eine Schließung des Sperrventils 84 bewirkt. Bei der genannten Außentemperatur wäre ein Betrieb der Wärmepumpe nicht mehr wirtschaftlich.

Bei Betrieb mit Wärme von einer unabhängigen Wärmequelle (Betriebsbeispiel 5) sind die Betriebsbedingungen gleich wie in Betriebsbeispiel 4, mit dem Unterschied, daß statt dem Ölbrenner 14 der Wärmeübertragungskörper 184 bzw. der Elektroheizeinsatz 15 in Betrieb sind. Es versteht sich, daß der Heizeinsatz im dritten Wasserraum 34 auch als elektrisches Heizelement ausgebildet sein kann.

Durch die Anordnung des dritten Wasserraumes 34 unter dem ersten Wasserraum 12 ergibt sich eine beachtliche Korrosionsverminderung im Feuerungsraum bzw. Brennschacht 16, insbesondere durch die Öffnungen 40, 41, 42, welche eine Temperierung des Brennschachtes bewirken. Auch ohne solche Öffnungen wird durch Wärmekonvektion durch die Trennwand zwischen dem ersten bzw. dritten Wasserraum eine günstige Temperierung erreicht.

Die Wirkungsweise des in Fig. 7 dargestellten Kombinationskessels 192 entspricht im wesentlichen der Wirkungsweise der anhand Fig. 1, 3—6 beschriebenen Kombinationskessel 10, 11, wobei jedoch durch die vertikale und im wesentlichen konzentrische Anordnung der zweiten bzw. dritten Wasserräume 26a bzw. 34a sowie der Boilerendstufe 28a und des Brauchwasservorwärmers 36a nicht nur günstigere Strömungsverhältnisse, sondern auch eine einfachere Leitungsführung und Verbindung zwischen den genannten Wasserräumen erreicht wird. Das durch die Leitung 90 von der Wärmepumpe zugeführte, erwärmte Wasser strömt durch den ringförmigen Wasserraum 26a entlang der Außenwand der Boilerendstufe 28a unte Erwärmung des durch den Boiler strömenden Brauchwassers und strömt teils gemäß den Pfeilen 208 durch den Ringspalt 206 in dem dritten Wasserraum 34a, teils wie oben beschrieben gemäß den Pfeilen 170, 172 in den ersten Wasserraum 12. Zusammen mit dem aus der Leitung 70 zuströmenden, relativ kalten Heizungsrücklaufwasser strömt es über die Leitbleche 210 gemäß den Pfeilen 212, 228 zum Saugtrichter 230 der Leitung 80. Das über die Leitung 155 dem Brauchwasservorwärmer 36a zuströmende kalte Brauchwasser wird vom Prallblech 222 gemäß den Pfeilen 224 seitlich verteilt und strömt gemäß den Pfeilen 220 durch den Ringspalt 218 in die Boilerendstufe 28a, wo es auf Gebrauchstemperatur erwärmt wird und gemäß den Pfeilen 226 durch die Leitung 158 abströmt.

Die Wirkungsweise des Kombinationskessels 234 gemäß Fig. 8 entspricht der des zuletzt beschriebenen, wobei jedoch durch den Doppelmantel 236 nicht nur eine bessere Nutzung der Wärme des von der Wärmepumpe durch die Leitung 90 zuströmenden Wassers erreicht wird, sondern auch eine zusätzliche vertikale Umwälzung des Wassers in der Boilerendstufe 28a gemäß den Pfeilen 250, wobei eine besonders vorteilhafte Strömungskomponente entlang der Innenwand der Boilerendstufe 28a erreicht wird. Der gegebenenfalls durch die Leitung 244 bewirkte Wasseraustausch zwischen dem ersten Wasserraum 12 und dem dritten Wasserraum 34a entspricht dem anhand der Öffnungen 40, 41, 42 oben bereits beschriebenen.

Es versteht sich, daß für den Boiler 28 bzw. die Boilerendstufe 28a sowie für den Brauchwasservorwärmer 36, 36a, 37 beliebige Wärmeübertrager verwendet werden können, wie z.B. Rohrschlangen.

Es versteht sich ferner, daß ein Wärmeübertragungskörper 184 mit mindestends einer Wärmeübertragungsfläche 186, die primärseitig mit Heizmitteln aus einer unabhängigen Wärmequelle versorgt werden kann, in dem mit dem Speicherteil 200 verbundenen Wasserraum 12 vorgesehen sein kann.

**Patentansprüche**

1. Anlage zur Raumheizung und Brauchwasseraufbereitung, mit einem Kombinationskessel und einer Wärmepumpe, wobei der Kessel einen durch eine Feuerung und/oder einen Heizeinsatz heizbaren ersten Wasserraum und einen mit diesem kommunizierenden zweiten Wasserraum aufweist, in welchem sich eine Wärmeübertragungsfläche zum Aufheizen von Brauchwasser befindet, dadurch gekennzeichnet, daß der Kombinationskessel (10, 11, 192, 234) einen dritten Wasserraum (34, 34a) mit einer Wärmeübertragungsfläche (36, 36a, 38) für das Vorwärmen von kaltem Brauchwasser aufweist, mit welchem vorzugsweise im Bereich niedrigster Wassertemperatur, der Kondensatorteil (86) der Wärmepumpe (88) verbunden ist, von welcher nach Aufheizung das Wasser in den zweiten Wasserraum (26, 26a) zurückgeführt wird, und daß der dritte Wasserraum (34, 34a) wenigstens mit dem zweiten Wasserraum (26, 26a) kommuniziert.

2. Anlage nach Anspruch 1, dadurch gekennzeichnet, daß im ersten Wasserraum (12) aufgeheiztes Wasser dem zweiten Wasserraum (26, 26a) über eine Leitung (74) zugeführt wird, in welcher sich eine Umwälzpumpe (76) befindet.

3. Anlage nach Anspruch 1, dadurch gekennzeichnet, daß sich der dritte Wasserraum (34, 34a) unterhalb des zweiten Wasserraumes (26, 26a) befindet.

4. Anlage nach Anspruch 1, dadurch gekennzeichnet, daß die Heizungsrücklaufleitung (70) der Raumheizung (66, 68) in den oberen Teil des dritten Wasserraumes (34, 34a) mündet.

5. Anlage nach Anspruch 1, dadurch gekennzeichnet, daß dem dritten Wasserraum (34, 34a) ein Sperrthermostat (102) zugeordnet ist, welcher beim Überschreiten eines vorbestimmten Temperaturwertes die Wärmepumpe (88) ausschaltet.

6. Anlage nach Anspruch 1, gekennzeichnet durch einen im dritten Wasserraum (34, 34a) befindlichen Heizeinsatz.

7. Anlage nach Anspruch 6, dadurch gekennzeichnet, daß der Heizeinsatz als elektrisches Heizelement ausgebildet ist.

8. Anlage nach Anspruch 6, dadurch gekennzeichnet, daß der Heizeinsatz als Wärmeübertragungskörper (184) mit

11    O OO1 419    12

mindestens einer Wärmeübertragungsfläche (186) ausgebildet ist, die primärseitig mit Heizmitteln aus einer unabhängigen Wärmequelle versorgt werden kann.

9. Anlage nach Anspruch 1, dadurch gekennzeichnet, daß ein direkter Übertritt vom zweiten Wasserraum in den dritten Wasserraum durch mindestens eine, Konvektionsströmungen zwischen dem zweiten und dem dritten Wasserraum erschwerende Übertrittsstelle (30, 31, 32, 206) gebildet ist, wobei sich zwischen dem zweiten und dritten Wasserraum (26, 26a bzw. 34, 34a) bei Betrieb der Wärmepumpe eine Temperaturdifferenz einstellt.

10. Anlage nach Anspruch 1, dadurch gekennzeichnet, daß durch einen Sonnenkollektor (146) vorgewärmte Luft dem Verdampferteil (130) der Wärmepumpe (88) zugeleitet wird.

11. Anlage nach Anspruch 4, dadurch gekennzeichnet, daß die Heizungsrücklaufleitung (70) durch eine Gabelrohr (44) in den dritten Wasserraum (34) geführt ist.

12. Anlage nach Anspruch 1, dadurch gekennzeichnet, daß bei Betrieb der Wärmepumpe Wasser durch eine zwischen dem zweiten und ersten Waserraum angeordnete Übertrittsstelle (22, 24) in den ersten Wasserraum strömt.

13. Anlage nach Anspruch 1, dadurch gekennzeichnet, daß der zweite bzw. dritte Wasserraum (26a, 34a) in einem gemeinsamen, im wesentlichen vertikalen Speicherteil (200) vorgesehen ist.

14. Anlage nach Anspruch 13, dadurch gekennzeichnet, daß der zweite bzw. dritte Wasserraum (26a, 34a) wenigstens teilweise als Ringraum zwischen der Innenwand des Speicherteils (200) und der Außenwand eines Boilers (202) ausgebildet ist.

15. Anlage nach Anspruch 13, dadurch gekennzeichnet, daß als Übertrittsstelle zwischen dem zweiten bzw. dritten Wasserraum (26a, 34a) ein Ringspalt (206) vorgesehen ist.

16. Anlage nach Anspruch 15, dadurch gekennzeichnet, daß im ringförmigen Teil des Wasserraumes (34a) unterhalb des Ringspaltes (206) Leitbleche (210) vorgesehen sind.

17. Anlage nach Anspruch 14, dadurch gekennzeichnet, daß im Boiler (202) als Übertrittsstelle zwischen der Wärmeübertragungsfläche (36a) des dritten Wasserraumes (34a) und der Boilerendstufe (28a) ein Ringspalt (218) vorgesehen ist.

18. Anlage nach Anspruch 13, dadurch gekennzeichnet, kaß der Speicherteil (200) über eine lösbare Verbindung (198) mit dem Feuerungsteil (196) verbunden ist.


**Claims**

1. A plant for space heating and service-water heating, comprising a combination boiler and a heat pump, the boiler having a first water chamber adapted to be heated by a furnace and/or a heating insert, and a second water chamber which communicates with the first and which contains a heat-exchange surface for heating service water, characterised in that the combination boiler (10, 11, 192, 234) has a third water chamber (34, 34a) containing a heat-exchange surface (36, 36a, 38) for preheating cold service water, said third water chamber (34, 34a), preferably in the lowest water temperature zone, being connected to the condenser section (86) of the heat pump (88), from which the water after it has been heated up is returned to the second water chamber (26, 26a) and that the third water chamber (34, 34a) communicates at least with the second water chamber (26, 26a).

2. A plant according to claim 1, characterised in that water heated in the first water chamber (12) is fed to the second water chamber (26, 26a) via a pipe (74) containing a circulation pump (76).

3. A plant according to claim 1, characterised in that the third water chamber (34, 34a) is situated beneath the second water chamber (26, 26a).

4. A plant according to claim 1, characterised in that the return pipe (70) of the space heating system (66, 68) leads into the top part of the third water chamber (34, 34a).

5. A plant according to claim 1, characterised in that a stop thermostat (102) is associated with the third water chamber (34, 34a) and switches off the pump (88) when a predetermined temperature is exceeded.

6. A plant according to claim 1, characterised by a heater insert in the third water chamber (34, 34a).

7. A plant according to claim 6, characterised in that the heater insert is constructed as an electrical heating element.

8. A plant according to claim 6, characterised in that the heater insert is constructed as a heat-exchange element (184) having at least one heat-exchange surface (186), the primary side of which can be fed with heating media from an independent heat source.

9. A plant according to claim 1, characterised in that a direct transfer from the second water chamber to the third water chamber is formed by at least one transfer station (30, 31, 32, 206) which renders convection flow difficult between the second and third water chambers, so that a temperature difference occurs between the second and third water chambers (26, 26a and 34, 34a respectively) when the heat pump (88) is in operation.

10. A plant according to claim 1, characterised in that air preheated by a solar collector (146) is fed to the evaporator section (130) of the heat pump (88).

11. A plant according to claim 4, characterised in that the space heating return pipe (70) is taken into the third water chamber (34) via a forked pipe (44).

12. A plant according to claim 1, characterised in that when the heat pump is in operation water can flow to the first water chamber via a transfer station (22, 24) provided between the second and first water chambers.

13. A plant according to claim 1, characterised in that the second and third water chambers (26a, 34a) are provided in a common substantially vertical storage section (200).

14. A plant according to claim 13, characterised in that the second and third water chambers (26a, 34a) are constructed at least partially as an annular space between the inner wall of the storage section (200) and the outer wall of a boiler (202).

15. A plant according to claim 13, characterised in that an annular gap (206) is provided as transfer section between the second and third water chambers (26a, 34a).

16. A plant according to claim 15, characterised in that baffle plates (210) are provided in the annular part of the water chamber (34a) beneath the annular gap (206).

17. A plant according to claim 4, characterised in that in the boiler (202) the transfer station between the heat-exchange surface (36a) of the third water chamber (34a) and the boiler end stage (28a) is an annular gap (218).

18. A plant according to claim 13, characterised in that the storage section (200) is connected to the furnace section (196) by a detachable connection (198).

**Revendications**

1. Installation de chauffage d'espace et de traitement d'eau d'utilisation comprenant une chaudière combinée et une pompe à chaleur, la chaudière comportant une première chambre à eau qu'on peut chauffer par un brûleur et/ou un élément de chauffage ainsi qu'une second chambre à eau communiquant avec la première et dans laquelle se trouve une surface de transmission de chaleur pour chauffer l'eau d'utilisation, charactérisée en ce que la chaudière combinée (10, 11, 192, 234) comprend une troisième chambre à eau (34, 34a) ayant une surface de transmission de la chaleur (36, 36a, 38) pou préchauffer l'eau d'utilisation froide, cette troisième chambre à eau étant reliée de préférence dans la zone de température d'eau la plus basse avec la partie condenseur (86) de la pompe à chaleur (88) à partir de laquelle après chauffage l'eau est renvoyée dans la seconde chambre à eau (26, 26a), et en ce que la troisième chambre à eau (34, 34a) communique au moins avec la second chambre à eau (26, 26a).

2. Installation selon la revendication 1, charactérisée en ce que l'eau chauffée dans la première chambre à eau (12) est amenée à la second chambre à eau (26, 26a) par l'intermédiaire d'une conduite (74) où se trouve une pompe de circulation (76).

3. Installation selon la revendication 1, caractérisée en ce que la troisième chambre à eau (34, 34a) se trouve en dessous de la deuxième chambre (26, 26a).

4. Installation selon la revendication 1, caractérisée en ce que la conduite de retour de chauffage (70) du dispositif de chauffage d'espace (66, 68) débouche dans la partie supérieure de la troisième chambre à eau (34, 34a).

5. Installation selon la revendication 1, caractérisée en ce que la troisième chambre à eau (34, 34a) est associée à un thermostat de blocage (102) qui, lors du dépassement d'une valeur de température prédéterminée, met hors fonctionnement la pompe de chaleur (88).

6. Installation selon la revendication 1, caractérisée par un élément de chauffage se trouvant dans la troisième chambre (34, 34a).

7. Installation selon la revendication 6, caractérisée en ce que l'élément de chauffage est un élément électrique de chauffage.

8. Installation selon la revendication 6, caractérisée en ce que l'élément de chauffage est un corps de transmission de chaleur (184) ayant au moins une surface de transmission de chaleur (186) qui, du côté primaire, peut être munie de moyens de chauffage provenant d'une source indépendante de chaleur.

9. Installation selon la revendication 1, caractérisée en ce qu'un passage direct de la deuxième chambre à eau à la troisième chambre à eau est formé par au moins une zone de transition (30, 31, 32, 206) rendant plus difficiles les courants de convexion entre la deuxième et la troisième chambre à eau, une différence de température s'établissant alors entre la deuxième et la troisième chambre à eau (26, 26a ou 34, 34a) lors du fonctionnement de la pompe à chaleur.

10. Installation selon la revendication 1, caractérisée en ce que l'air préchauffé par un collecteur de radiation solaire (146) est amené à une partie évaporateur (130) de la pompe à chaleur (88).

11. Installation selon la revendication 4, caractérisée en ce que la conduite de retour de chauffage (70) s'étend vers la troisième chambre à eau (34) par l'intermédiaire d'un tube en fourche (44).

12. Installation selon la revendication 1, caractérisée en ce que, lors du fonctionnement de la pompe à chaleur, de l'eau s'écoule par une zone de passage (22, 24) se trouvant entre la deuxième et la troisième chambre à eau.

13. Installation selon la revendication 1, caractérisée en ce que la deuxième ou la troisième chambre à eau (26a, 34a) sont prévues dans une partie accumulateur (200) commune et seniblement verticale.

14. Installation selon la revendication 13, caractérisée en ce que la deuxième ou la troisième chambre à eau (26a, 34a) sont réalisées au moins partiellement sous la forme d'une chambre annulaire se trouvant entre la paroi interne de la partie accumulateur (200) et la paroi externe d'un chauffe-eau (202).

15. Installation selon la revendication 13, caractérisée en ce qu'on prévoit un espace annulaire (206) en tant que zone de transition entre la deuxième ou la troisième chambre à eau (26a, 34a).

16. Installation selon la revendication 15, caractérisée en ce que dans la partie annulaire de la chambre à eau (34a), on prévoit des déflecteurs (210) en dessous de l'espace annulaire (206).

17. Installation selon la revendication 14, caractérisée en ce qu'on prévoit dans le chauffe-eau (202) une zone de transition sous la forme d'un espace annulaire entre la surface de transmission de chaleur (36a) de l'autre chambre à eau (34a) et l'étage terminal du chauffe-eau (28a).

18. Installation selon la revendication 13, caractérisée en ce que la partie accumulateur (200) est reliée à la partie combustion (196) par une liaison amovible (198).

Fig. 1

Fig. 2

Fig. 3

0 001 419

# Fig. 4

# Fig. 5

0 001 419

Fig. 6

0 001 419

Fig. 7

Fig. 8